# EUROPÄISCHE PATENTSCHRIFT

(11) **EP 1 609 346 B1**
(45) Veröffentlichungstag und Bekanntmachung des Hinweises auf die Patenterteilung: **04.07.2012**
(21) Anmeldenummer: 05105506.9
(22) Anmeldetag: 21.06.2005
(51) Int. Cl.: A01B 59/06, E02F 3/38

(54) **Bewegliches Schnittstellensystem mit mehreren Freiheitsgraden**
Movable interface with multiple degrees of freedom
Interface articulé avec plusieurs degrés de liberté

(30) Priorität: 21.06.2004 US 873366
(43) Veröffentlichungstag der Anmeldung: 28.12.2005
(73) Patentinhaber: DEERE & COMPANY, Moline, Illinois 61265-8098 (US)
(72) Erfinder: Hendron, Scott Svend, 52003, Dubuque (US)
(74) Vertreter: Holst, Sönke

(56) Entgegenhaltungen:
- EP-A- 0 948 882
- EP-A- 1 095 549
- DE-A1- 2 642 311
- DE-A1- 3 814 775
- US-A- 4 944 649
- US-A- 5 511 329

## Beschreibung

Die vorliegende Erfindung bezieht sich auf die aktive Positionierung von Arbeitswerkzeugen bei Arbeitsfahrzeugen. Insbesondere bezieht sie sich auf ein bewegliches Schnittstellensystem mit mehreren Freiheitsgraden für ein Arbeitsfahrzeug, sowie auf eine Schnittstellenstruktur und ein Arbeitsfahrzeug mit einem Schnittstellensystem. Es wird eine Schnittstellenstruktur, beispielsweise ein Schwenkrahmen für einen Löffelbagger, aktiv angesteuert, wobei eine Verschwenkung des Löffelbaggergestänges einschließlich des Arbeitswerkzeugs in mehreren Freiheitsgraden möglich ist.

Arbeitsfahrzeuge enthalten im Allgemeinen bewegliche Schnittstellenstrukturen für die Manipulation mindestens eines Werkzeugs und eines Gestänges in Bezug auf einen Fahrzeuggrundrahmen. Das Gestänge wird gewöhnlich an einer beweglichen Schnittstellenstruktur mit einem einzigen Schwenkfreiheitsgrad angebracht, kann sich aber häufig mit einem zusätzlichen Freiheitsgrad bewegen, weil die bewegliche Schnittstellenstruktur ebenfalls einen Schwenkfreiheitsgrad in Bezug auf den Fahrzeuggrundrahmen hat.

Löffelbagger enthalten eine bewegliche Schnittstellenstruktur, durch die das Gestänge und das Löffelbaggerwerkzeug mit dem Fahrzeugrahmen verbunden sind. Diese bewegliche Schnittstellenstruktur wird treffend mit Schwenkrahmen bezeichnet und ist gewöhnlich auf einen Schwenkfreiheitsgrad in Bezug auf das Fahrzeug begrenzt, d.h. auf eine Gierbewegung, bei der ein Verschwenken um eine senkrechte Achse erfolgt. An dem Schwenkrahmen ist ein Ausleger verschwenkbar angebracht und gewöhnlich ebenfalls auf einen Schwenkfreiheitsgrad begrenzt, d.h. auf eine Nickbewegung in Bezug auf den Schwenkrahmen, bei der ein Verschwenken um eine horizontale Achse erfolgt. Alle weiteren Teile des Gestänges sind im Allgemeinen auf Nickbewegungen bezüglich anderer Teile, mit denen sie verbunden sind, begrenzt. Damit sind die Arbeitswerkzeugbewegungen in Bezug auf den Fahrzeugrahmen auf Gier-, Nick- und translatorische Bewegungen begrenzt.

Wie oben erwähnt, sind aufgrund der Natur der Befestigung zwischen dem Schwenkrahmen und dem Grundrahmen und zwischen allen weiteren Elementen des Löffelbaggergestänges übliche Bewegungen für irgendeinen Teil des Gestänges oder das Arbeitswerkzeug in Bezug auf den Fahrzeugrahmen begrenzt auf Gier-, Nick- und translatorische Bewegungen. Dieses kann zu Schwierigkeiten führen, wenn seitliches Graben erforderlich ist, d. h., wenn eine Bedienungsperson einen Graben in seitlicher Richtung graben möchte. Dies kann längere, sperrige Gestängeteile erfordern, um eine gegebene Tiefe für das Arbeitswerkzeug zur Verfügung zu stellen. Längeres, sperriges Gestänge führt zu Gewichtverteilungsproblemen für ein Arbeitsfahrzeug, welches dann schwerer und länger sein muss. Dieses führt zu Unwirtschaftlichkeiten bezüglich Treibstoffverbrauch und zu einer verhältnismäßig ungünstigen Bedienung des Arbeitsfahrzeugs.

Die EP 1 095 549 A1 zeigt eine Schnittstellenstruktur mit einem Kupplungsrahmen, der über Hydraulikzylinder an einem Arbeitsfahrzeug angebracht ist. Die Verbindungen zwischen den Hydraulikzylindern und dem Kopplungsrahmen beziehungsweise dem Fahrzeug sind gelenkig ausgebildet.

Die EP 0 948 882 A1 zeigt eine Gerätekopplungsvorrichtung zur Kopplung eines Anbaugeräts an ein landwirtschaftliches Fahrzeug.

Es ist eine Aufgabe der vorliegenden Erfindung, ein bewegliches Schnittstellensystem, eine bewegliche Schnittstellenstruktur und ein Fahrzeug bereitzustellen, durch welches die zuvor genannten Probleme überwunden und die Wünsche erfüllt werden. Insbesondere soll das Schnittstellensystem sowohl Querneigungs- oder Kippbewegungen, bei denen ein Schwenken um eine im Wesentlichen in Fahrzeuglängsrichtung verlaufende horizontale Achse erfolgt, als auch Nick- und Gierbewegungen ermöglichen.

Diese Aufgabe wird entsprechend der vorliegenden Erfindung durch die Lehren eines der Ansprüche 1oder 17 gelöst. Weitere vorteilhafte Ausgestaltungen und Weiterbildungen der Erfindung gehen aus den abhängigen Ansprüchen hervor.

Das erfindungsgemäße bewegliche Schnittstellensystem, auch mobiles Interfacesystem genannt, ist für ein Arbeitsfahrzeug vorgesehen, welches einen Fahrzeugrahmen, ein Gestänge mit einem ersten Gestängeende und mit einem zweiten Gestängeende sowie ein Arbeitswerkzeug aufweist. Das erfindungsgemäße Schnittstellensystem enthält eine bewegliche Schnittstellenstruktur, auch mobile Interfacestruktur genannt, wenigstens eine am Fahrzeugrahmen befestigbare Aufhängung zur Abstützung der beweglichen Schnittstellenstruktur und wenigstens zwei in Längsrichtung verstellbare Bauteile, die sich zwischen dem Fahrzeugrahmen und der beweglichen Schnittstellenstruktur erstrecken. Die Aufhängung weist wenigstens einen sphärischen Abschnitt aufweist, welcher mit einem hierauf angepassten Gelenkabschnitt der Schnittstellenstruktur korrespondiert und von diesem aufgenommen wird, um ein Kugelgelenk zu bilden. Die in Längsrichtung verstellbaren Bauteile sind in radialer Richtung, also quer zu ihrer Längsausrichtung steif. Sie weisen jeweils ein erstes Bauteilende und ein zweites Bauteilende auf. Die in Längsrichtung verstellbaren Bauteile sind befähigt, ihre Länge auf Anforderung aktiv zu ändern. Die jeweils ersten Bauteilenden sind gelenkig an dem Fahrzeugrahmen befestigt und die zweiten Bauteilenden sind durch hierfür vorgesehene Mittel der Schnittstellenstruktur gelenkig an dieser befestigt. Die Aufhängung ist zur starren Befestigung an dem Fahrzeugrahmen ausgebildet. Die Schnittstellenstruktur enthält Mittel, z. B. Gelenkstellen, die ihrer Befestigung am ersten Gestängeende dienen. Am zweiten Gestängeende ist das Arbeitswerkzeug montiert.

Kern der Erfindung ist somit die Verwendung von in Längsrichtung in ihrer Länge verstellbaren Bauteilen. Die Länge der Bauteile wird durch eine Steuerung aktiv eingestellt. Die beiden Enden jedes dieser Bauteile sind einerseits mit dem Fahrzeugrahmen und andererseits mit einer beweglichen Schnittstellenstruktur gelenkig verbunden, wobei die Verbindung Bewegungen in mehreren Freiheitsgraden zulässt. Das erfindungsgemäße Schnittstellensystem ermöglicht damit sowohl Querneigungs- oder Kippbewegungen als auch Nick- und Gierbewegungen für die Schnittstellenstruktur, so dass diese Bewegungen auch an das Gestänge und das Arbeitswerkzeug übertragen werden, welche an die Schnittstellenstruktur angeschlossen sind.

Vorzugsweise enthält die bewegliche Schnittstellenstruktur einen Schwenkrahmen und die wenigstens eine Aufhängung wenigstens eine Schwenkrahmenaufhängung. Die Schwenkrahmenaufhängung dient insbesondere der vertikalen Abstützung des Schwenkrahmens am Fahrzeugrahmen.

Eine vorteilhafte Ausgestaltung der Erfindung sieht vor, dass die jeweils ersten Bauteilenden mit wenigstens einem ersten, in einer ersten Ebene liegenden Schwenkfreiheitsgrad gelenkig an dem Fahrzeugrahmen anschließbar sind und dass die zweiten Bauteilenden mit wenigstens einem zweiten, in einer zweiten Ebene liegenden Schwenkfreiheitsgrad gelenkig an der Schnittstellenstruktur angeschlossen sind.

Hierbei schließt der wenigstens eine erste und/oder der wenigstens eine zweite Schwenkfreiheitsgrad wenigstens eine Nickbewegung und/oder eine Gierbewegung und/oder eine Querneigungsbewegung ein.

Für eine universelle Bewegung des Schwenkrahmens ist es von Vorteil, wenn der wenigstens eine erste Schwenkfreiheitsgrad eine Nickbewegung, eine Gierbewegung und eine Querneigungsbewegung einschließt und/oder auch der wenigstens eine zweite Schwenkfreiheitsgrad eine Nickbewegung, eine Gierbewegung und eine Querneigungsbewegung einschließt.

Für viele Anwendungsfälle ist es auch vorteilhaft, wenn der wenigstens eine erste Schwenkfreiheitsgrad eine Nickbewegung und der wenigstens eine zweite Schwenkfreiheitsgrad eine Gierbewegung einschließt oder wenn umgekehrt der wenigstens eine erste Schwenkfreiheitsgrad eine Gierbewegung und der wenigstens eine zweite Schwenkfreiheitsgrad eine Nickbewegung einschließt.

Die weitgehendste Beweglichkeit wird dadurch erreicht, dass die ersten Bauteilenden mit drei Schwenkfreiheitsgraden gelenkig an dem Fahrzeugrahmen anschließbar sind und die zweiten Bauteilenden mit drei Freiheitsgraden gelenkig an der Schnittstellenstruktur angeschlossen sind.

Vorzugsweise sind die wenigstens zwei in Längsrichtung verstellbaren Bauteile Hydraulikzylinder. Es können hier jedoch auch elektrisch oder pneumatisch betätigte Elemente verwendet werden.

Gemäß einer weiteren zweckmäßigen Ausgestaltung der Erfindung sind die in Längsrichtung verstellbaren Bauteile mittels Kugelgelenke an den Fahrzeugrahmen anschließbar. Ergänzend oder alternativ hierzu können die Bauteile auch mittels Kugelgelenken an der beweglichen Schnittstellenstruktur angeschlossen werden.

Für eine zuverlässige Abstützung der Schnittstellenstruktur kann in vorteilhafter Weise die wenigstens eine Aufhängung als starres, festes Metallstück ausgebildet sein, welches weder in Längsrichtung noch quer dazu nachgibt.

Für eine weitere Steigerung der Freiheitsgrade kann die Aufhängung jedoch auch in ihrer Länge verstellbar sein, was auch eine translatorische Bewegung der Schnittstellenstruktur relativ zum Fahrzeugrahmen in Fahrzeuglängsrichtung ermöglicht.

Als längsverstellbare Aufhängung eignet sich auch hier in besonders vorteilhafter Weise ein Hydraulikzylinder, auch wenn elektrische oder pneumatische Stellglieder ebenfalls in Betracht kommen können.

Um den Stützeffekt der längsverstellbaren Aufhängung sicherzustellen, ist es von besonderem Vorteil, wenn ein erstes Aufhängungsende starr an dem Fahrzeugrahmen befestigt ist und das zweite Aufhängungsende mit drei Freiheitsgraden gelenkig an der beweglichen Schnittstellenstruktur angeschlossen ist.

Zur Erhöhung der Stabilität sollten die verstellbaren Bauteile und/oder die längenverstellbaren Aufhängungen nicht die gleiche Ausrichtung zueinander haben, d. h. sie sollten nicht parallel zueinander verlaufen. Eine bevorzugte Weiterbildung der Erfindung sieht daher vor, dass vier in Längsrichtung verstellbare, insbesondere als Hydraulikzylinder ausgebildete Bauteile und gegebenenfalls wenigstens eine in ihrer Länge verstellbare, insbesondere als Hydraulikzylinder ausgebildete Aufhängung vorgesehen sind, welche jeweils unterschiedliche Orientierungen aufweisen.

Zur aktiven Beeinflussung der verstellbaren Bauteile und der Abstützungen, insbesondere der Hydraulikzylinder, sind vorzugsweise eine Gerätesteuerung und eine Steuereinheit vorgesehen. Die Steuereinheit steuert aufgrund einer Betätigung der Gerätesteuerung, beispielsweise eines Joysticks, die wenigstens zwei in Längsrichtung verstellbaren Bauteile und gegebenenfalls die wenigstens eine in ihrer Länge verstellbare Aufhängung an, so dass diese ihre Längen in einer koordinierten Art und Weise ändern und die Schnittstellenstruktur die gewünschte Ausrichtung in Bezug auf den Fahrzeugrahmen einnimmt.

Vorzugsweise ist die Steuerung derart ausgelegt, dass wenigstens zwei in Längsrichtung verstellbare Bauteile und/oder Abstützungen ihre Länge aktiv ändern, um die beweglichen Schnittstellenstruktur auf Anforderung zu veranlassen, wenigstens eine Nick- und/oder Querneigungs- und/oder Gierbewegung auszuführen.

Die Erfindung betrifft des Weiteren ein Arbeitsfahrzeug mit einem erfindungsgemäßen Schnittstellensystem, welches neben einem Fahrzeugrahmen ein wenigstens aus einem Ausleger und einem Arm bestehendes Gestänge mit einem ersten mit der beweglichen Schnittstellenstruktur befestigten Gestängeende und einem zweiten mit dem Arbeitswerkzeug befestigten Gestängeende umfasst.

Die Erfindung und weitere vorteilhafte Weiterbildungen und Ausgestaltungen der Erfindung werden nun beispielhaft und mit Bezugnahme auf die beigefügten Zeichnungen näher beschrieben und erläutert. Es zeigt:
- Fig. 1: eine Seitenansicht, bei dem anhand des hinteren Endes des Arbeitsfahrzeugs die vorliegende Erfindung beispielhaft veranschaulicht wird,
- Fig. 2: eine Abbildung der beweglichen Schnittstellenstruktur, d.h. den in Fig. 1 gezeigten Schwenkrahmen,
- Fig. 3: eine Seitenansicht des Arbeitsfahrzeugs gemäß Fig. 1, welche die Nickbewegung für den Schwenkrahmen und das Gestänge veranschaulicht,
- Fig. 4: eine Ansicht des Arbeitsfahrzeugs gemäß Fig. 1 von hinten, welche die Querneigungsbewegung oder Kippbewegung des Schwenkrahmens und des Gestänges veranschaulicht,
- Fig. 5: eine Ansicht des Arbeitsfahrzeugs von oben, welche die durch die Erfindung ermöglichte Gier- oder Schwenkbewegung veranschaulicht,
- Fig. 6: ein Diagramm einer beispielhaften Ausgestaltung der Erfindung,
- Fig. 7: eine Abbildung einer Ausgestaltung des beweglichen Schnittstellensystems, welches als Aufhängung einen Hydraulikzylinder aufweist,
- Fig. 8: eine Abbildung einer Ausgestaltung des beweglichen Schnittstellensystems, welches als Aufhängung zwei Hydraulikzylindern aufweist,
- Fig. 9: eine Abbildung einer Ausgestaltung des beweglichen Schnittstellensystems, bei dem ein Gelenkbereich der beweglichen Schnittstellenstruktur abnehmbar ist,
- Fig. 10: eine Abbildung einer Ausgestaltung des beweglichen Schnittstellensystems, bei dem die Aufhängung einen Gelenkbereich hat und der Anschlussbereich der mobilen Schnittstellenstruktur einen abnehmbaren kugelförmigen Teil aufweist,
- Fig. 11: eine Ansicht einer anderen Ausgestaltung des mobilen Schnittstellensystems und
- Fig. 12: eine Seitenansicht eines Arbeitsfahrzeugs, welches einen herkömmlichen Schwingenrahmen aufweist.

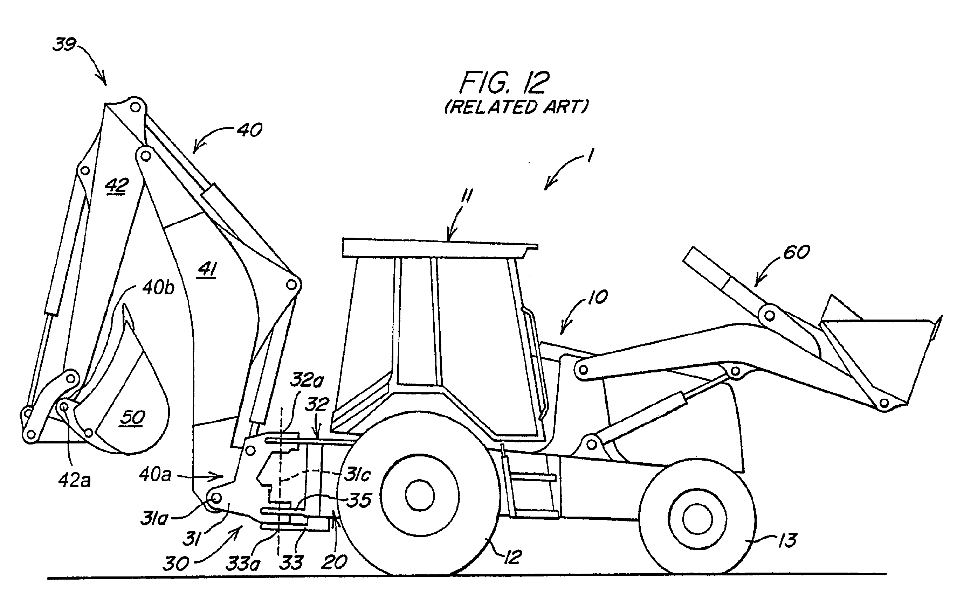

Die Fig. 12 veranschaulicht ein herkömmliches Arbeitsfahrzeug 10, bei dem die Erfindung verwendet werden kann. Das besondere in Fig. 12 gezeigte Arbeitsfahrzeug 10 ist ein Laderlöffelbagger, welcher üblicherweise Doppelfunktionen hat. Die Funktionen des besonderen, dargestellten Arbeitsfahrzeugs 10 sind die eines Löffelbaggers und die einer Ladevorrichtung. Das Arbeitsfahrzeug 10 enthält ein Fahrerhaus 11, einen Fahrzeugrahmen 20, ein bewegliches Schnittstellensystem 30, einen Löffelbaggerabschnitt 39 und einen Ladevorrichtungsabschnitt 60. Es schließt auch Räder 12 und 13 sowie ein Antriebsystem ein (nicht gezeigt), welches es entlang dem Boden auf eine im Stand der Technik gut bekannte Weise antreibt.

Bei dem beweglichen Schnittstellensystem 30 handelt es sich um ein herkömmliches System, welches eine bewegliche Schnittstellenstruktur, auch Schwenkrahmen 31 genannt, zwei Schwenkrahmenaufhängungen 32 und 33 und zwei Hydraulikzylinder 35 einschließt. Der Schwenkrahmen 31 ist hinsichtlich des Verschwenkens derart beschränkt, dass er nur zu Gier- und Schwenkbewegungen fähig ist, d.h. der herkömmliche Schwenkrahmen 31 ist auf eine Schwenkbewegungen um die vertikale Achse 31c begrenzt. Der Grund hierfür ist, dass die Aufhängungen 32 und 33 steif ausgebildete, fest am Rahmen 20 angebrachte Teile sind und dass die zwei Hydraulikzylinder 35 sich auf gegenüberliegenden Seiten der Schwenkachse 31c, die durch feste Gelenkpunkte 32a und 33a definiert ist, befinden und fest am Fahrzeugrahmen 20 angebracht sind.

Der Löffelbaggerabschnitt 39 des Arbeitsfahrzeugs 10 enthält eine Schaufel 50 und ein Gestänge 40. Das Gestänge 40 schließt einen Ausleger 41 und einen Arm 42 ein. Ein erstes Ende des Auslegers 41 ist mit dem Schwenkrahmen 31 über eine horizontale Schwenkachse 31a schwenkbar verbunden, welche bezüglich des Schwenkrahmens 31 nur einen Freiheitsgrad in Nickrichtung zulässt. Ein zweites Ende des Arms 42 ist mit der Schaufel 50 über eine horizontale Schwenkachse 42a schwenkbar verbunden, welche bezüglich der Schaufel 50 nur einen Freiheitsgrad in Nickrichtung zulässt.

Diese Art der Anordnung ermöglicht keine Querneige- oder Kippbewegung (Verschwenken um eine im Wesentlichen in Fahrzeuglängsrichtung verlaufende horizontale Achse) des Gestänges 40 in Bezug auf den Rahmen 20 und macht daher verschiedene Betriebsarten, wie z.B. das Graben von seitlichen Gräben, schwierig bis unmöglich. Tatsächlich können mit herkömmlichen Löffelbaggern winklige Gräben nicht hergestellt werden, ohne dass das gesamte Arbeitsfahrzeug 10 auf den gewünschten Grabenwinkel gekippt wird. Des Weiteren ist es völlig offensichtlich, dass herkömmliche bewegliche Schnittstellensysteme dieses Typs nicht einfach auf größere Schwenkfreiheiten modifizierbar sind, da die Gelenkpunkte 32a und 33a relativ zum Fahrzeugrahmen 20 ortsfest sind und ihre Positionen durch die steifen und normalerweise massiven Schwingenrahmenaufhängungen 32 und 33 festgelegt sind, welche integraler Bestandteil des Fahrzeugrahmens 20 sind.

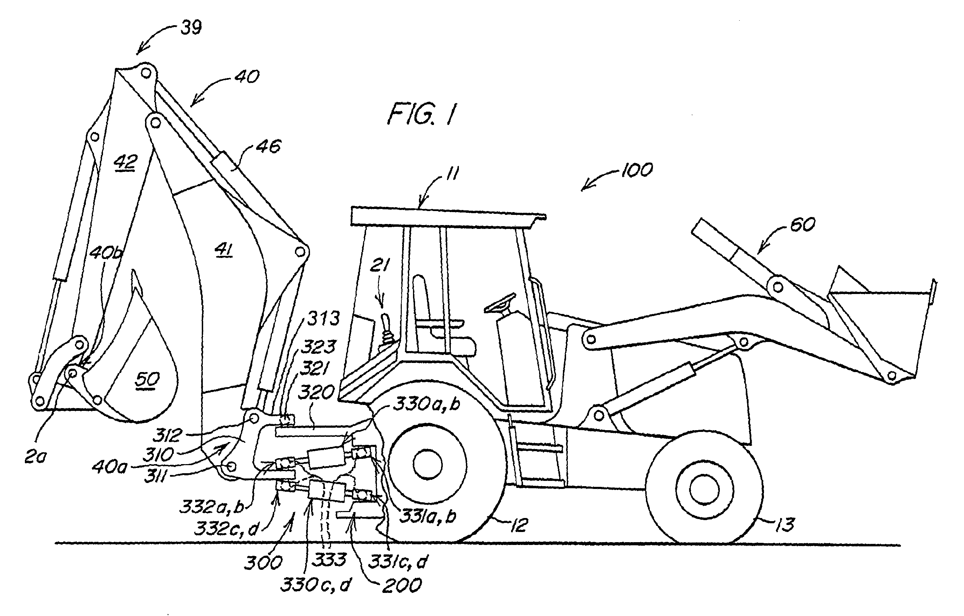

Fig. 1 veranschaulicht einen Laderlöffelbagger 100, bei dem eine beispielhafte Ausgestaltung der Erfindung verwendet wird. Der Löffelbaggerteil 39 des Laderlöffelbaggers 100 schließt das Gestänge 40 ein, welches ein erstes Ende 40a und ein zweites Ende 40b, das Arbeitswerkzeug oder die Schaufel 50 und ein bewegliches Schnittstellensystem 300 hat. Das bewegliche Schnittstellensystem 300 schließt eine bewegliche Schnittstellenstruktur, auch Schwenkrahmen 310 genannt, eine Schwenkrahmenaufhängung 320 und vier Hydraulikzylinder 330a-d ein. Die Schwenkrahmenaufhängung 320 enthält einen Kugelabschnitt 321 mit einer Gelenkkugel, und der Schwenkrahmen 310 enthält einen Gelenkabschnitt 313 mit einer Kugelpfanne, welcher geeignet ist, den Kugelabschnitt 321 aufzunehmen und ein Kugelgelenk 323 zu bilden. Das Kugelgelenk 323 liegt im Raum fest und lässt drei Rotationsfreiheitsgrade für den Schwenkrahmen 310 zu. Über zugehörige kugelförmige Lager 333 ist jeder der Hydraulikzylinder 330a-d schwenkbar mit einem ersten seiner Zylinderenden 331a-d an dem Fahrzeugrahmen 200 und mit einem zweiten seiner Zylinderenden 332a-d an der beweglichen Schnittstellenstruktur 300 angeschlossen. Damit gibt es bei dieser besonderen Ausgestaltung der Erfindung für jeden Anschluss 331a-d und 332a-d jedes der Hydraulikzylinder 330a-d drei Schwenkfreiheitsgrade. Die Hydraulikzylinder 330a-d dieser Ausgestaltung sind so angeordnet, dass sie unterschiedliche Winkel zueinander einnehmen. Beispielsweise ist Winkel α1 ungleich zu α2 und Winkel α3 ungleich zu α4. Dieses gewährleistet es, dass jeder der Hydraulikzylinder 330a-d einzigartig ausgerichtet ist, wodurch die Gesamtstabilität des beweglichen Schnittstellensystems 300 erhöht wird. Der Löffelbaggerabschnitt 39 ist auf ähnliche Weise am Schwenkrahmen 310 befestigt, wie dies beim bekannten Schenkrahmen 31 der Fig. 12 erfolgt. Dabei ist ein erstes Ende 40a über eine Schwenkachse 311 am Schwenkrahmen 310 angebracht und ein zweites Ende 40b über eine Schwenkachse 42a an der Schaufel 50 angebracht.

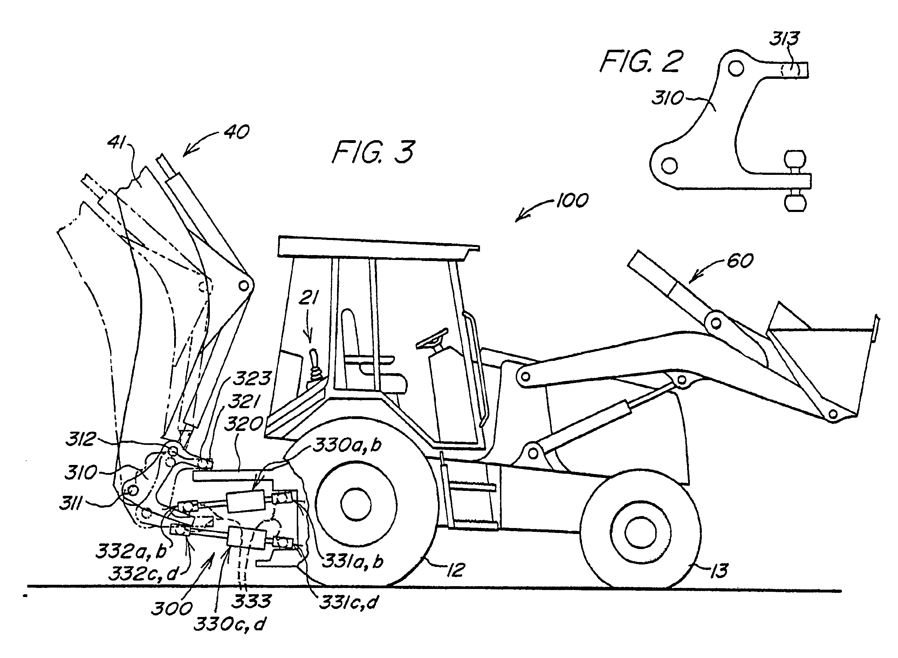

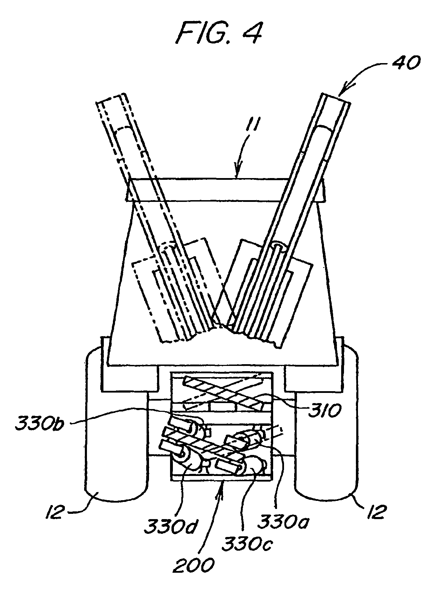

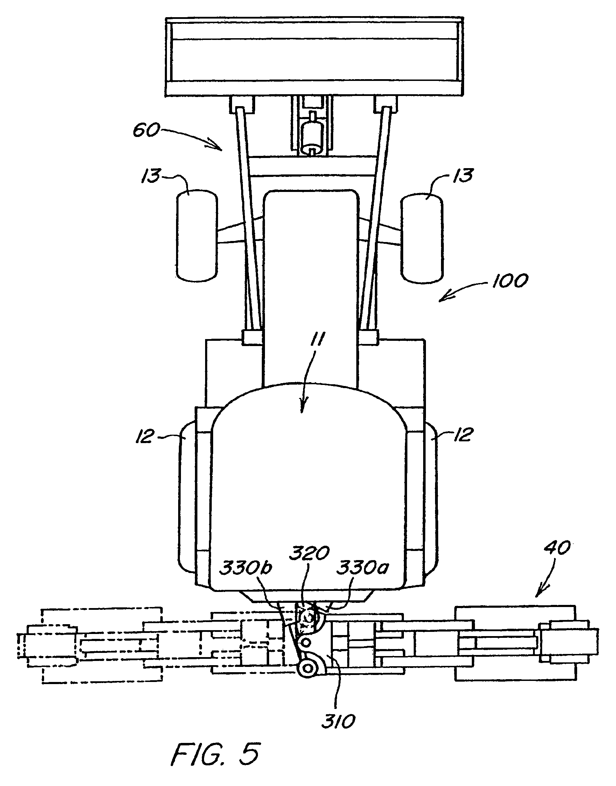

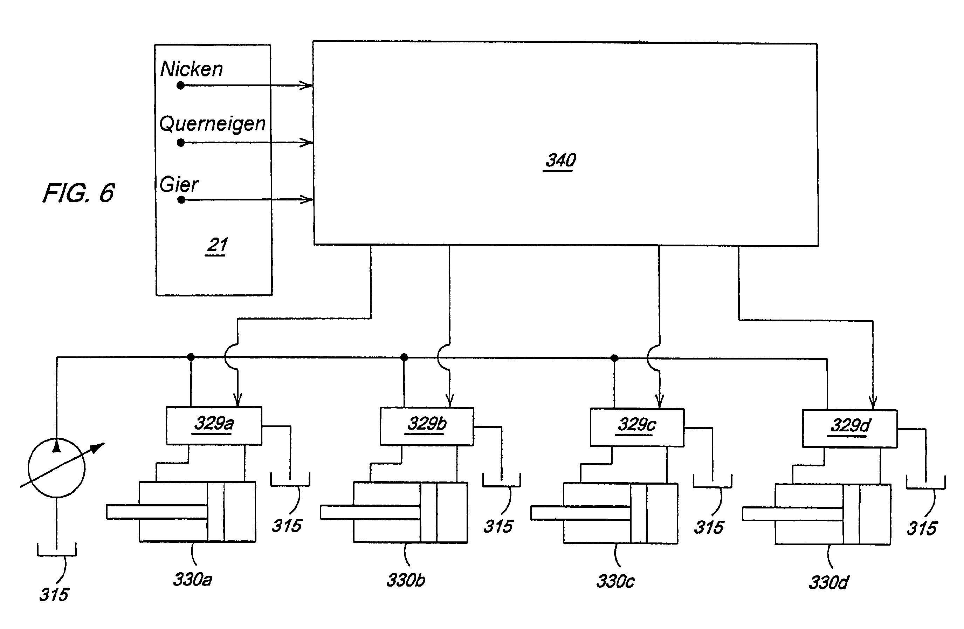

Wie in den Figuren 3 bis 6 dargestellt, ermöglicht solch eine Anordnung genügende Rotationsfreiheitsgrade, um durch die aktive Steuerung der Längenänderungen der Hydraulikzylinder 331a-d eine Steuerung der Querneigungsbewegung, auch Roll- oder Kippbewegung genannt, der Gierbewegung und der Nickbewegung des Schwenkrahmens 310 zu ermöglichen. Diese bestimmte Ausgestaltung kann auf eine etwas elementare Art und Weise durch eine Bedienungsperson gesteuert werden, welche einen oder mehrere herkömmliche mit einer Steuereinheit 340 verbundene Hebel oder Steuerknüppel 21 betätigt, wobei fest verlegte oder örtlich festliegende elektrische, elektromagnetische, mechanische oder hydraulische Verbindungen zu Verschiebungssteuerventilen 329a-d für jeden der Hydraulikzylinder 331a-d vorgesehen sind. Um jedoch eine anspruchsvollere Steuerung der Bewegung und Position der beweglichen Schnittstellenstruktur 310 zu erzielen, sollte die Steuereinheit 340 programmierbar sein und so programmiert werden, dass sie eine ausgeklügeltere Steuerung der Ventile sowie bei der Ausführung von Roll-, Nick- und Gierbewegungen eine koordiniertere Leistung für die Hydraulikzylinder 331a-d zur Verfügung zu stellt.

Es sind Gleichungen und Computerprogramme zur Betätigung von Strukturen mit vielen Zylindern bekannt, welche die in dieser Ausgestaltung beschriebenen Rotationsfreiheitsgrade aufweisen. Jedoch werden solche Programme und Gleichungen hauptsächlich für Testbetriebe auf Prüfständen verwendet. Sie müssten auf jedes einzelne Arbeitsfahrzeug angepasst werden. Wenn somit keine fertigen Standardprogramme verfügbar sein sollten, kann jeder auf diesem Gebiet tätige Fachmann ohne übermäßige Schwierigkeiten oder Experimente ein Steuerprogramm für die Steuereinheit 340 entwickeln, welches eine technisch ausgereifte Handhabung der beweglichen Schnittstellenstruktur 310 über eine oder mehr Steuervorrichtungen, wie beispielsweise den Steuerknüppel 21 oder Joystick, ermöglicht.

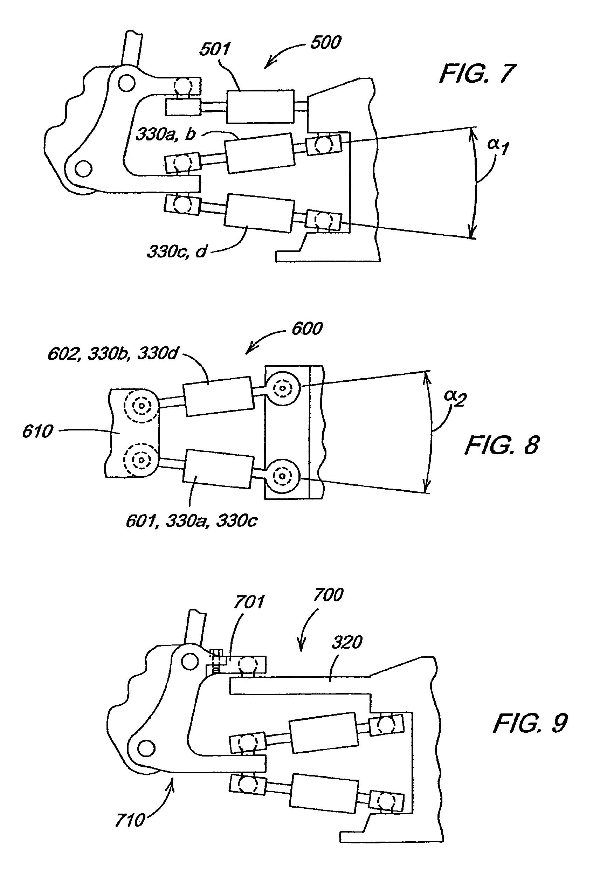

Fig. 7 veranschaulicht eine Ausgestaltung des beweglichen Schnittstellensystems 500, in welchem als Aufhängung ein Hydraulikzylinder 501 verwendet wird, welcher mit einem Ende starr am Fahrzeugrahmen 210 angebracht ist. Diese Ausgestaltung erlaubt das Teleskopieren oder die Bewegung der beweglichen Schnittstellenstruktur 310 vom Fahrzeugrahmen 210 weg.

Fig. 8 veranschaulicht eine Ausgestaltung des beweglichen Schnittstellensystems 600, welches als Aufhängungen 601 und 602 zwei Hydraulikzylinder hat, welche an dem Fahrzeugrahmen 400 mit Schwenkfreiheitsgraden in Roll-, Nick- und Gierrichtungen angebracht sind. Diese bestimmte Ausgestaltung erlaubt Schwenkfreiheitsgrade für den Schwenkrahmen 610 in Nick-, Gier- und Rollrichtung, erfordert aber eine koordinierte Bewegung der Aufhängungen 601 und 602.

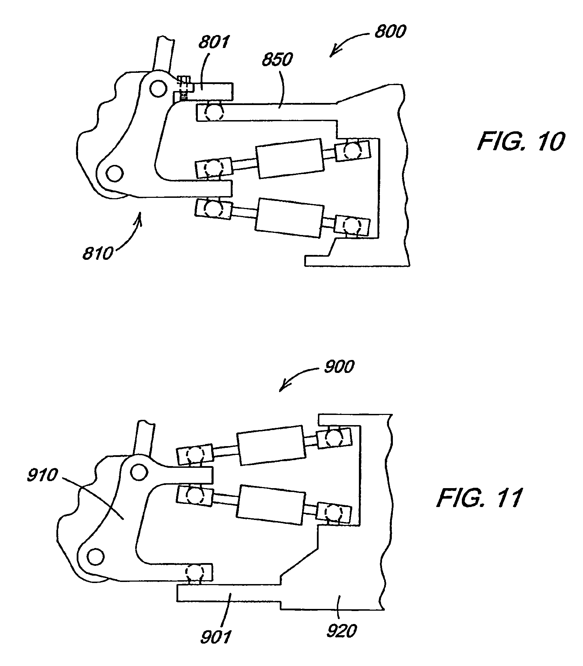

Fig. 9 veranschaulicht eine Ausgestaltung des beweglichen Schnittstellensystems 700, bei welchem der Gelenkabschnitt 701 der beweglichen Schnittstellenstruktur 710 abnehmbar ist. Fig. 10 veranschaulicht eine alternative Ausgestaltung des beweglichen Schnittstellensystems 800, bei welchem die bewegliche Schnittstellenstruktur 810 einen lösbaren kugelförmigen Abschnitt 801 und die Aufhängung 850 einen Gelenkbereich hat.

Fig. 11 veranschaulicht eine andere Ausgestaltung des beweglichen Schnittstellensystems 900, bei welcher die Aufhängung 901 in einer Position des Schwenkrahmens 910 lokalisiert ist, nämlich unten, die zu allen anderen in den Figuren 1 bis 10 dargestellten Schwenkrahmenpositionen verschieden ist.

Auch wenn die vorliegende Erfindung lediglich in Verbindung mit einigen besonderen Ausführungsbeispiel beschrieben wurde, versteht es sich, dass im Lichte der vorhergehenden Beschreibung viele Alternativen, Abwandlungen und Variationen für einen Fachmann offensichtlich sind, die unter den Schutzbereich der beigefügten Patentansprüche fallen.

## Patentansprüche

1. Schnittstellensystem für ein Arbeitsfahrzeug, mit wenigstens einer an einem Fahrzeugrahmen (200) des Arbeitsfahrzeugs (100) befestigbaren Aufhängung (320, 501, 850, 901), welche wenigstens eine erste Gelenkstelle (321) aufweist, mit einer beweglichen Schnittstellenstruktur (310, 710, 810, 910) zur Befestigung eines ein Arbeitswerkzeug (50) umfassenden Gestänges (40, 40a, 40b, 41, 42), welche wenigstens eine zur Aufnahme der ersten Gelenkstelle (321) geeignete zweite Gelenkstelle (313) aufweist, um mit dieser ein Kugelgelenk (323) zu bilden, und mit wenigstens zwei radial steifen, in Längsrichtung verstellbaren Bauteilen (330a-d), welche jeweils ein erstes Bauteilende (331a-d) und ein zweites Bauteilende (332a-d) aufweisen, wobei die wenigstens zwei in Längsrichtung verstellbaren Bauteile (330a-d) befähigt sind, ihre Länge auf Anforderung aktiv zu ändern, und wobei das erste Bauteilende (331a-d) gelenkig an dem Fahrzeugrahmen (200) und das zweite Bauteilende (332a-d) gelenkig an der beweglichen Schnittstellenstruktur (310, 710, 810, 910) befestigbar ist,
**dadurch gekennzeichnet,**
**dass** die Aufhängung (320, 501, 850, 901) zur starren Befestigung an dem Fahrzeugrahmen (200) ausgebildet ist.

2. Schnittstellensystem nach Anspruch 1,
**dadurch gekennzeichnet,**
**dass** die bewegliche Schnittstellenstruktur einen Schwenkrahmen (310, 710, 810, 910) und die wenigstens eine Aufhängung eine Schwenkrahmenaufhängung (320, 501, 850, 901) umfasst.

3. Schnittstellensystem nach Anspruch 1 oder 2,
**dadurch gekennzeichnet,**
**dass** die jeweils ersten Bauteilenden (331a-d) mit wenigstens einem ersten Schwenkfreiheitsgrad gelenkig an dem Fahrzeugrahmen (200) anschließbar sind und die jeweils zweiten Bauteilenden (332a-d) mit wenigstens einem zweiten Schwenkfreiheitsgrad gelenkig an der Schnittstellenstruktur (310, 710, 810, 910) angeschlossen sind.

4. Schnittstellensystem nach Anspruch 3,
**dadurch gekennzeichnet,**
**dass** der wenigstens eine erste Schwenkfreiheitsgrad und/oder der wenigstens eine zweite Schwenkfreiheitsgrad wenigstens eine Nickbewegung und/oder eine Gierbewegung und/oder eine Querneigungsbewegung einschließt.

5. Schnittstellensystem nach Anspruch 3 oder 4,
**dadurch gekennzeichnet,**
**dass** der wenigstens eine erste Schwenkfreiheitsgrad und/oder der wenigstens zweite Schwenkfreiheitsgrad eine Nickbewegung, eine Gierbewegung und eine Querneigungsbewegung einschließt.

6. Schnittstellensystem nach einem der Ansprüche 3 bis 5,
**dadurch gekennzeichnet,**
**dass** der wenigstens eine erste Schwenkfreiheitsgrad eine Nickbewegung und der wenigstens eine zweite Schwenkfreiheitsgrad eine Gierbewegung einschließt, oder dass der wenigstens eine erste Schwenkfreiheitsgrad eine Gierbewegung und der wenigstens eine zweite Schwenkfreiheitsgrad eine Nickbewegung einschließt.

7. Schnittstellensystem nach einem der Ansprüche 1 bis 6,
**dadurch gekennzeichnet,**
**dass** die jeweils ersten Bauteilenden (331a-d) mit drei Schwenkfreiheitsgraden gelenkig an dem Fahrzeugrahmen (200) anschließbar sind und die jeweils zweiten Bauteilenden (332a-d) mit drei Freiheitsgraden gelenkig an der Schnittstellenstruktur (310, 710, 810, 910) angeschlossen sind.

8. Schnittstellensystem nach einem der Ansprüche 1 bis 7,
**dadurch gekennzeichnet,**
**dass** die wenigstens zwei in Längsrichtung verstellbaren Bauteile Hydraulikzylinder (330a-d) sind.

9. Schnittstellensystem nach einem der Ansprüche 1 bis 8,
**dadurch gekennzeichnet,**
**dass** die wenigstens zwei in Längsrichtung verstellbaren Bauteile (330a-d) über Kugelgelenke (333) an den Fahrzeugrahmen (200) anschließbar sind und/oder die wenigstens zwei in Längsrichtung verstellbaren Bauteile (330a-d) über Kugelgelenke (333) an der beweglichen Schnittstellenstruktur (310, 710, 810, 910) angeschlossen sind.

10. Schnittstellensystem nach einem der Ansprüche 1 bis 9,
**dadurch gekennzeichnet,**
**dass** die wenigstens eine Aufhängung (320, 501, 850, 901) als festes Metallstück ausgebildet ist.

11. Schnittstellensystem nach einem der Ansprüche 1 bis 10,
**dadurch gekennzeichnet,**
**dass** die wenigstens eine Aufhängung (501) in ihrer Länge verstellbar ist.

12. Schnittstellensystem nach einem der Ansprüche 1 bis 11,
**dadurch gekennzeichnet,**
**dass** die wenigstens eine Aufhängung (200) einen Hydraulikzylinder (501) umfasst.

13. Schnittstellensystem nach Anspruch 12,
**dadurch gekennzeichnet,**
**dass** der Hydraulikzylinder (501) ein erstes Aufhängungsende und ein zweites Aufhängungsende umfasst, wobei das erste Aufhängungsende starr an dem Fahrzeugrahmen (200) und das zweite Aufhängungsende mit drei Freiheitsgraden gelenkig an der beweglichen Schnittstellenstruktur (310) angeschlossen ist.

14. Schnittstellensystem nach einem der Ansprüche 1 bis 13,
**dadurch gekennzeichnet,**
**dass** vier in Längsrichtung verstellbare, insbesondere als Hydraulikzylinder (330a-d) ausgebildete Bauteile und gegebenenfalls eine in ihrer Länge verstellbare, insbesondere als Hydraulikzylinder (501) ausgebildete Aufhängung vorgesehen sind, welche jeweils unterschiedliche Orientierungen aufweisen.

15. Schnittstellensystem nach einem der Ansprüche 1 bis 14,
**dadurch gekennzeichnet,**
**dass** eine Gerätesteuerung (21) und eine Steuereinheit (340) vorgesehen sind und die Steuereinheit (340) aufgrund einer Betätigung der Gerätesteuerung (21) die wenigstens zwei in Längsrichtung verstellbaren Bauteile (330a-d) derart ansteuert, dass diese ihre Längen in einer koordinierten Art und Weise ändern.

16. Schnittstellensystem nach Anspruch 15,
**dadurch gekennzeichnet,**
**dass** die Längen von wenigstens zwei der in Längsrichtung verstellbaren Bauteile (330a-d) aktiv veränderbar sind, um die bewegliche Schnittstellenstruktur (310, 710, 810, 910) auf Anforderung zu veranlassen, wenigstens eine Nick- und/oder Querneigungs- und/oder Gierbewegung auszuführen.

17. Arbeitsfahrzeug mit einem Schnittstellensystem nach einem der vorhergehenden Ansprüche 1 bis 16, welches neben einem Fahrzeugrahmen (200) ein wenigstens aus einem Ausleger (41) und einem Arm (42) bestehendes Gestänge (40) mit einem ersten mit der beweglichen Schnittstellenstruktur (310, 710, 810, 910) befestigten Gestängeende (40a) und einem zweiten mit dem Arbeitswerkzeug (50) befestigten Gestängeende (40b) umfasst.

## Claims

1. Interface system for a utility vehicle comprising at least one suspension system (320, 501, 850, 901) which may be fastened to a vehicle frame (200) of the utility vehicle (100), said suspension system having at least one first point of articulation (321), comprising a movable interface structure (310, 710, 810, 910) for fastening a rod assembly (40, 40a, 40b, 41, 42) having a working tool (50), said rod assembly having at least one second point of articulation (313) suitable for receiving the first point of articulation (321) in order to form therewith a ball joint (323), and comprising at least two radially rigid components (330a-d) which may be adjusted in the longitudinal direction and which in each case comprise a first component end (331a-d) and a second component end (332a-d), the at least two components (330a-d) which are adjustable in the longitudinal direction being capable of actively altering their length on demand, and the first component end (331a-d) being able to be fastened in an articulated manner to the vehicle frame (200) and the second component end (332a-d) being able to be fastened in an articulated manner to the movable interface structure (310, 710, 810, 910), **characterized in that** the suspension system (320, 501, 850, 901) is configured to be rigidly fastened to the vehicle frame (200).

2. Interface system according to Claim 1, **characterized in that** the movable interface structure comprises a pivoting frame (310, 710, 810, 910) and the at least one suspension system comprises a pivoting frame suspension system (320, 501, 850, 901).

3. Interface system according to Claim 1 or 2, **characterized in that** the respective first component ends (331a-d) may be attached in an articulated manner to the vehicle frame (200) with at least one first pivoting degree of freedom and the respective second component ends (332a-d) are attached in an articulated manner to the interface structure (310, 710, 810, 910) with at least one second pivoting degree of freedom.

4. Interface system according to Claim 3, **characterized in that** the at least one first pivoting degree of freedom and/or the at least one second pivoting degree of freedom comprises at least one pitching movement and/or a yaw movement and/or a transverse inclination movement.

5. Interface system according to Claim 3 or 4, **characterized in that** the at least one first pivoting degree of freedom and/or the at least second pivoting degree of freedom comprises a pitching movement, a yaw movement and a transverse inclination movement.

6. Interface system according to one of Claims 3 to 5, **characterized in that** the at least one first pivoting degree of freedom comprises a pitching movement and the at least one second pivoting degree of freedom comprises a yaw movement or the at least one first pivoting degree of freedom comprises a yaw movement and the at least one second pivoting degree of freedom comprises a pitching movement.

7. Interface system according to one of Claims 1 to 6, **characterized in that** the respective first component ends (331a-d) may be attached in an articulated manner to the vehicle frame (200) with three pivoting degrees of freedom and the respective second component ends (332a-d) are attached in an articulated manner to the interface structure (310, 710, 810, 910) with three degrees of freedom.

8. Interface system according to one of Claims 1 to 7, **characterized in that** the at least two components which may be adjusted in the longitudinal direction are hydraulic cylinders (330a-d).

9. Interface system according to one of Claims 1 to 8, **characterized in that** the at least two components which may be adjusted in the longitudinal direction (330a-d) are able to be attached via ball joints (333) to the vehicle frame (200) and/or the at least two components (330a-d) which may be adjusted in the longitudinal direction are attached via ball joints (333) to the movable interface structure (310, 710, 810, 910).

10. Interface system according to one of Claims 1 to 9, **characterized in that** the at least one suspension system (320, 501, 850, 901) is configured as a fixed metal piece.

11. Interface system according to one of Claims 1 to 10, **characterized in that** the at least one suspension system (501) may be adjusted in its length.

12. Interface system according to one of Claims 1 to 11, **characterized in that** the at least one suspension system (200) comprises a hydraulic cylinder (501).

13. Interface system according to Claim 12, **characterized in that** the hydraulic cylinder (501) comprises a first suspension end and a second suspension end, the first suspension end being attached rigidly to the vehicle frame (200) and the second suspension end being attached in an articulated manner to the movable interface structure (310) with three degrees of freedom.

14. Interface system according to one of Claims 1 to 13, **characterized in that** four components which are adjustable in the longitudinal direction and configured, in particular, as hydraulic cylinders (330a-d) and optionally a suspension system which is adjustable in its length and configured, in particular, as a hydraulic cylinder (501) are provided, said components having different orientations in each case.

15. Interface system according to one of Claims 1 to 14, **characterized in that** a device control unit (21) and a control unit (340) are provided and, as a result of actuating the device control unit (21), the control unit (340) activates the at least two components (330a-d) which are adjustable in the longitudinal direction such that said components alter their length in a coordinated manner.

16. Interface system according to Claim 15, **characterized in that** the lengths of at least two components which are adjustable in the longitudinal direction (330a-d) are able to be actively altered in order to cause the movable interface structure (310, 710, 810, 910) to carry out, on demand, at least one pitching movement and/or transverse inclination movement and/or yaw movement.

17. Utility vehicle comprising an interface system according to one of the preceding Claims 1 to 16, which in addition to a vehicle frame (200) comprises a rod assembly (40), consisting at least of an extension arm (41) and an arm (42), having a first rod assembly end (40a) fastened to the movable interface structure (310, 710, 810, 910) and a second rod assembly end (40b) fastened to the working tool (50).

## Revendications

1. Système d'interface pour un engin de travail, doté d'au moins une suspension (320, 501, 850, 901) pouvant être fixée sur un châssis de véhicule (200) de l'engin de travail (100), laquelle présente au moins un premier point d'articulation (321), d'une structure d'interface mobile (310, 710, 810, 910) pour la fixation d'une tringlerie (40, 40a, 40b, 41, 42) comprenant un outil de travail (50), laquelle présente au moins un deuxième point d'articulation (313) approprié pour recevoir le premier point d'articulation (321), afin de former avec ce deuxième point d'articulation une articulation sphérique (323), et d'au moins deux composants (330a-d) rigides radialement et réglables dans la direction longitudinale, qui présentent chacun une première extrémité de composant (331a-d) et une deuxième extrémité de composant (332a-d), les au moins deux composants (330a-d) réglables dans la direction longitudinale étant en mesure de modifier leur longueur de manière active sur demande, et la première extrémité de composant (331a-d) pouvant être fixée de manière articulée sur le châssis du véhicule (200) et la deuxième extrémité de composant (332a-d) pouvant être fixée de manière articulée à la structure d'interface mobile (310, 710, 810, 910),
**caractérisé en ce que**
la suspension (320, 501, 850, 901) est réalisée en vue d'une fixation rigide sur le châssis du véhicule (200).

2. Système d'interface selon la revendication 1,
**caractérisé en ce que**
la structure d'interface mobile comprend un châssis pivotant (310, 710, 810, 910) et l'au moins une suspension comprend une suspension de châssis pivotant (320, 501, 850, 901).

3. Système d'interface selon la revendication 1 ou 2,
**caractérisé en ce que**
les premières extrémités de composant (331a-d) respectives peuvent être raccordées de manière articulée au châssis de véhicule (200) avec au moins un premier degré de liberté de pivotement, et les deuxièmes extrémités de composant (332a-d) respectives sont raccordées de manière articulée à la structure d'interface (310, 710, 810, 910) avec au moins un deuxième degré de liberté de pivotement.

4. Système d'interface selon la revendication 3,
**caractérisé en ce que**
l'au moins un premier degré de liberté de pivotement et/ou l'au moins un deuxième degré de liberté de pivotement incluent au moins un mouvement de tangage et/ou un mouvement de lacet et/ou un mouvement d'inclinaison transversale.

5. Système d'interface selon la revendication 3 ou 4,
**caractérisé en ce que**
l'au moins un premier degré de liberté de pivotement et/ou l'au moins un deuxième degré de liberté de pivotement incluent un mouvement de tangage, un mouvement de lacet et un mouvement d'inclinaison transversale.

6. Système d'interface selon l'une quelconque des revendications 3 à 5,
**caractérisé en ce que**
l'au moins un premier degré de liberté de pivotement inclut un mouvement de tangage et l'au moins un deuxième degré de liberté de pivotement inclut un mouvement de lacet, ou **en ce que** l'au moins un premier degré de liberté de pivotement inclut un mouvement de lacet et l'au moins un deuxième degré de liberté de pivotement inclut un mouvement de tangage.

7. Système d'interface selon l'une quelconque des revendications 1 à 6,
**caractérisé en ce que**
les premières extrémités de composant (331a-d) respectives peuvent être raccordées de manière articulée au châssis du véhicule (200) avec trois degrés de liberté de pivotement, et les deuxièmes extrémités de composant (332a-d) respectives sont raccordées de manière articulée à la structure d'interface (310, 710, 810, 910) avec trois degrés de liberté.

8. Système d'interface selon l'une quelconque des revendications 1 à 7,
**caractérisé en ce que**
les au moins deux composants réglables dans la direction longitudinale sont des cylindres hydrauliques (330a-d).

9. Système d'interface selon l'une quelconque des revendications 1 à 8,
**caractérisé en ce que**
les au moins deux composants (330a-d) réglables dans la direction longitudinale peuvent être raccordés par le biais d'articulations sphériques (333) au châssis du véhicule (200) et/ou les au moins deux composants (330a-d) réglables dans la direction longitudinale sont raccordés par le biais d'articulations sphériques (333) à la structure d'interface mobile (310, 710, 810, 910).

10. Système d'interface selon l'une quelconque des revendications 1 à 9,
**caractérisé en ce que**
l'au moins une suspension (320, 501, 850, 901) est réalisée sous forme de pièce métallique fixe.

11. Système d'interface selon l'une quelconque des revendications 1 à 10,
**caractérisé en ce que**
l'au moins une suspension (501) est réglable en longueur.

12. Système d'interface selon l'une quelconque des revendications 1 à 11,
**caractérisé en ce que**
l'au moins une suspension (200) comprend un cylindre hydraulique (501).

13. Système d'interface selon la revendication 12,
**caractérisé en ce que**
le cylindre hydraulique (501) comprend une première extrémité de suspension et une deuxième extrémité de suspension, la première extrémité de suspension étant raccordée rigidement au châssis du véhicule (200) et la deuxième extrémité de suspension étant raccordée de manière articulée à la structure d'interface mobile (310) avec trois degrés de liberté.

14. Système d'interface selon l'une quelconque des revendications 1 à 13,
**caractérisé en ce que**
quatre composants réalisés de manière réglable dans la direction longitudinale, notamment sous forme de cylindres hydrauliques (330a-d) et éventuellement une suspension réglable en longueur, réalisée notamment sous forme de cylindre hydraulique (501), sont prévus, lesquels présentent à chaque fois des orientations différentes.

15. Système d'interface selon l'une quelconque des revendications 1 à 14,
**caractérisé en ce**
**qu'**une commande d'appareil (21) et une unité de commande (340) sont prévues et l'unité de commande (340) commande les au moins deux composants réglables (330a-d) dans la direction longitudinale sur la base d'un actionnement de la commande d'appareil (21), de telle sorte que ceux-ci modifient leur longueur de manière coordonnée.

16. Système d'interface selon la revendication 15,
**caractérisé en ce que**
les longueurs d'au moins deux des composants (330a-d) réglables dans la direction longitudinale peuvent être modifiées activement, afin de permettre à la structure d'interface mobile (310, 710, 810, 910), sur demande, d'effectuer au moins un mouvement de tangage et/ou d'inclinaison transversale et/ou de lacet.

17. Engin de travail, comprenant un système d'interface selon l'une quelconque des revendications 1 à 16, lequel outre un châssis de véhicule (200), comprend une tringlerie (40) constituée d'au moins un bras en porte-à-faux (41) et d'un bras (42), avec une première extrémité de tringlerie (40a) fixée à la structure d'interface (310, 710, 810, 910) et une deuxième extrémité de tringlerie (40b) fixée à l'outil de travail (50).
